# EUROPEAN PATENT APPLICATION

(11) **EP 4 618 194 A1**
(43) Date of publication of application: **17.09.2025**
(21) Application number: 23917105.1
(22) Date of filing: 24.10.2023
(51) Int. Cl.: H01M 4/58, H01M 10/054

(54) **POSITIVE ELECTRODE ACTIVE MATERIAL AND PREPARATION METHOD THEREFOR, SECONDARY BATTERY, BATTERY MODULE, BATTERY PACK AND ELECTRIC DEVICE**

(30) Priority: 16.01.2023 CN 202310070398
(71) Applicant: Contemporary Amperex Technology (Hong Kong) Limited, Hong Kong (HK)
(72) Inventor: ZHAO, Yuzhen, Ningde, Fujian 352100 (CN); GUAN, Yingjie, Ningde, Fujian 352100 (CN); YANG, Huiling, Ningde, Fujian 352100 (CN); QIN, Meng, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2023/126243
(87) International publication number: WO 2024/152637

(57) **Abstract**

Provided in the present application are a positive electrode active material and a preparation method therefor, a secondary battery, a battery module, a battery pack and an electric device. The positive electrode active material is used as a positive electrode active material for a secondary battery and comprises a carbon-material-compounded iron-based polyanionic compound and a magnesium-containing oxide, wherein the iron-based polyanionic compound has the following general formula: Na₄Fe₃₋ₓMₓMg_{y}(PO₄)₂P₂O₇, where M comprises a transition metal element, 0 ≤ x < 0.5, and 0 < y < 0.18. The positive electrode active material has a relatively low amount of a residual alkali, and the battery has good cycle performance and rate capability.

## Description

### CROSS-REFERENCE

The present application refers to Chinese Patent Application No. 202310070398.5, entitled "POSITIVE ELECTRODE ACTIVE MATERIAL AND PREPARATION METHOD THEREFOR, SECONDARY BATTERY, BATTERY MODULE, BATTERY PACK AND ELECTRIC DEVICE", filed on January 16, 2023, which is incorporated herein by reference in its entirety.

### TECHNICAL FIELD

The present application relates to the technical field of secondary batteries, and in particular, to a positive electrode active material and a preparation method therefor, a secondary battery, a battery module, a battery pack, and an electric device.

### BACKGROUND

Sodium batteries have great application potential in large-scale energy storage due to the abundant reserves of sodium, low prices, and wide operating temperature range.

As a popular positive electrode material for novel sodium batteries, iron-based polyanionic compounds have significant advantages such as abundant resources, high operating voltage, good cycle stability, and environmental friendliness. However, sodium batteries with iron-based polyanionic compounds as positive electrode materials still face issues such as low electronic conductivity, low discharge capacity, and poor cycle performance. These issues make them unable to meet the application requirements of the new generation of electrochemical systems.

### SUMMARY

The present application is made in view of the problems described above, and its purpose is to provide a positive electrode active material, in which a magnesium element is introduced to achieve the dual effects of lattice doping and composite modification, thereby effectively reducing the residual alkali content of the positive electrode active material and improving the cycle performance and rate capability of the battery.

In a first aspect of the present application, provided is a positive electrode active material for use in a secondary battery, which includes a carbon material-composited iron-based polyanionic compound and a magnesium-containing oxide, and the iron-based polyanionic compound has the following general formula: Na₄Fe₃₋ₓMₓMg_{y}(PO₄)₂P₂O₇/C,
where M includes a transition metal element, 0 ≤ x ≤ 0.5, and 0 < y < 0.18.

By introducing a magnesium element into the positive electrode active material, in one aspect, a portion of the magnesium element can be doped into the lattice of the iron-based polyanionic compound to replace the iron element or the transition metal element in the lattice of the iron-based polyanionic compound, thereby enhancing the ionic conductivity and electronic conductivity of the positive electrode active material, and improving ion-conducting and electron-conducting properties of the positive electrode active material. In another aspect, a portion of the magnesium element is distributed on the surface of the iron-based polyanionic compound in the form of a magnesium-containing oxide, which reduces the direct contact between the surface of the positive electrode active material and the moisture in the environment, lowers the residual alkali content of the positive electrode active material, and improves the stability and processability of the positive electrode active material. Moreover, the positive electrode active material also has a high specific capacity, which is conducive to improving the energy density of the battery.

By introducing a carbon material into the positive electrode active material, the electrical conductivity of the positive electrode active material and battery performance can be effectively improved.

In any embodiment, the magnesium-containing oxide is distributed on at least a portion of the surface of a primary particle of the iron-based polyanionic compound.

The magnesium-containing oxide is distributed on either a portion of the surface or the entire surface of a primary particle of the iron-based polyanionic compound, which can effectively reduce the direct contact between the surface of the positive electrode active material and the moisture in the environment, lower the residual alkali content of the positive electrode active material, and improve the stability and processability of the positive electrode active material.

In any embodiment, the mass content of the magnesium element in the positive electrode active material is 0.02% to 0.7% based on the total mass of the positive electrode active material.

The mass content of the magnesium element in the positive electrode active material is controlled to be 0.02% to 0.7% based on the total mass of the positive electrode active material, which is conducive to reducing the residual alkali content of the positive electrode active material and improving the stability and processability of the positive electrode active material, thereby improving the cycle performance and rate capability of the battery.

In any embodiment, M includes one or more of Ni, Co, Mn, Cu, V, Ti, Mo, Nb, W, Cr, Zn, Zr, and Ca, optionally one or more of Ni, Co, Mn, Cu, V, and Ca.

The doping of transition metal elements into an iron-based polyanionic compound is conducive to increasing the voltage plateau of the positive electrode active material, improving the ionic conductivity and electronic conductivity of the material, and reducing battery polarization, thereby improving the cycle performance and rate capability of the battery.

In any embodiment, M includes at least two of Ni, Co, Mn, Cu, V, and Ca.

M is controlled to include at least two of Ni, Co, Mn, Cu, V, and Ca, which is conducive to further improving the rate capability of the battery.

In any embodiment, the surface of the iron-based polyanionic compound is coated with the carbon material in the form of a carbon film, or the carbon material is distributed between primary ions of the iron-based polyanionic compound in the form of particles.

The surface of the iron-based polyanionic compound is coated with the carbon material in the form of a carbon film, or the carbon material is distributed between primary ions of the iron-based polyanionic compound in the form of particles, either of which can effectively improve the electrical conductivity of the positive electrode active material and the battery performance.

In any embodiment, the carbon material includes one or more of amorphous carbon, conductive carbon black, a carbon nanotube, and graphene.

The carbon material described above is readily dispersible and easy to process, and forms a carbon composite with an iron-based polyanionic compound, which improves the electrical conductivity of the positive electrode active material and the battery performance. Since the crystallinity of conductive carbon black, a carbon nanotube, or graphene is higher than that of amorphous carbon, the electrical conductivity of the carbon material including conductive carbon black, a carbon nanotube, or graphene is better than that of the carbon material including amorphous carbon.

In any embodiment, the mass content of the carbon material is 0.5% to 6%, optionally 1% to 3.6%, based on the total mass of the positive electrode active material.

The mass content of the carbon material is controlled to be 0.5% to 6% based on the total mass of the positive electrode active material, which is conducive to achieving a balance between the specific capacity and the electrical conductivity of the positive electrode active material, while also attaining a higher specific capacity and better cycle performance and rate capability. It should be avoided that the mass content of the carbon material is too low, which leads to poor electrical conductivity of the positive electrode active material and thus adversely affects the capacity volatilization of the positive electrode active material; it should be also avoided that the mass content of the carbon material is too high, which leads to a decrease in the specific capacity and deterioration in the compaction performance of the positive electrode active material. The mass content of the carbon material is controlled to be 1% to 3.6% based on the total mass of the positive electrode active material, which is conducive to further increasing the specific capacity of the positive electrode active material, thereby further improving the capacity of the battery.

In any embodiment, the specific capacity of the positive electrode active material is ≥ 98 mAh/g.

Positive electrode active materials with a specific capacity of ≥ 98 mAh/g are conducive to improving the capacity of batteries and broadening the application of batteries.

In any embodiment, the residual alkali content of NaHCO₃ in the positive electrode active material is less than 1.2% based on the total mass of the positive electrode active material.

The residual alkali content of NaHCO₃ in the positive electrode active material is less than 1.2% based on the total mass of the positive electrode active material, which can effectively improve the stability and processability of the positive electrode active material.

In a second aspect of the present application, provided is a preparation method for a positive electrode active material for use in a secondary battery. The method includes the following steps:
dissolving raw materials including an iron source, a sodium source, a phosphorus source, and a magnesium source in water to obtain a mixed slurry, where the raw materials optionally include an M source, and the M source includes a salt containing a transition metal; and
drying and then calcining the mixed slurry to prepare the positive electrode active material including an iron-based polyanionic compound and a magnesium-containing oxide, where the iron-based polyanionic compound has the following general formula:

   Na₄Fe₃₋ₓMₓMg_{y}(PO₄)₂P₂O₇/C,
where M includes a transition metal element, 0 ≤ x ≤ 0.5, and 0 < y < 0.18.

The preparation method for the positive electrode active material described above is simple and the production cost is low. The prepared positive electrode active material has a relatively low residual alkali content and a high specific capacity, and the battery has excellent cycle performance and rate capability.

In any embodiment, drying and then calcining the mixed slurry includes the following steps:
drying the mixed slurry to obtain a precursor powder; and
subjecting the precursor powder to a stepwise calcination process, with the temperature of the first calcination step being 300 °C to 400 °C and the time being 3 h to 6 h, and the temperature of the second calcination step being 500 °C to 600 °C and the time being 8 h to 15 h, to prepare the positive electrode active material.

Stepwise calcination is conducive to the complete reaction of the precursor powder, which enhances the crystallinity and phase purity of the prepared positive electrode active material, reduces the residual alkali content on the surface of the positive electrode active material, improves the stability and processability of the positive electrode active material, and increases the specific capacity of the positive electrode active material, thereby improving the cycle performance and rate capability of the battery.

In any embodiment, the temperature of the second calcination step is 525 °C to 575 °C, optionally 550 °C to 575 °C.

The temperature of the second calcination step is controlled to be 525 °C to 575 °C, which is conducive to further reducing the residual alkali content on the surface of the active material and improving the electrical conductivity of the material, thereby improving the cycle performance and rate capability of the battery. The temperature of the second calcination step is further controlled to be 550 °C to 575 °C, which is conducive to increasing the capacity retention rate after 200 cycles and the capacity retention rate at 3C rate of the battery to a greater extent, thereby improving the cycle performance and rate capability of the battery to a greater extent.

In any embodiment, the time of the second calcination step is 10 h to 14 h.

The time of the second calcination step is controlled to be 10 h to 14 h, which is conducive to obtaining a positive electrode active material with high crystallinity and high purity. At the same time, by controlling the holding time, the particle size of the primary crystal grains and the residual alkali content on the surface of the material can be controlled, thereby improving the specific capacity of the material and the cycle rate capability of the battery.

In any embodiment, the M source includes one or more of nickel nitrate, nickel acetate, cobalt nitrate, manganese nitrate, cobalt acetate, manganese acetate, nickel oxalate, cobalt oxalate, manganese oxalate, nickel oxide, cobalt oxide, and manganese oxide.

In any embodiment, the magnesium source includes one or more of magnesium nitrate, magnesium carbonate, magnesium acetate, magnesium hydroxide, magnesium oxalate, and magnesium oxide.

In any embodiment, the carbon source includes one or more of sucrose, tannic acid, polyethylene glycol, polyacrylonitrile, cellulose, polyvinylpyrrolidone, sucrose, oxalic acid, glucose, ascorbic acid, polyethylene, citric acid, conductive carbon black, a carbon nanotube, and graphene.

The carbon source described above, when calcined at high temperatures, readily generates a carbon material that either coats the surface of the iron-based polyanionic compound or is distributed between primary particles of the iron-based polyanionic compound, thereby improving the electrical conductivity of the positive electrode active material. Due to the influence of the calcination temperature, the amorphous carbon formed by the carbon source including one or more of sucrose, tannic acid, polyethylene glycol, polyacrylonitrile, cellulose, polyvinylpyrrolidone, sucrose, oxalic acid, glucose, ascorbic acid, polyethylene, citric acid, conductive carbon black, a carbon nanotube, and graphene has relatively low crystallinity, while the carbon material generated by the carbon source including one or more of conductive carbon black, a carbon nanotube, and graphene has relatively high crystallinity. Therefore, the carbon material generated by the carbon source including one or more of conductive carbon black, a carbon nanotube, and graphene has more excellent conductive property.

In a third aspect of the present application, provided is a secondary battery, which includes a positive electrode plate. The positive electrode plate includes the positive electrode active material according to any embodiment or the positive electrode active material prepared by the preparation method according to any embodiment.

In any embodiment, the secondary battery is a negative electrode-free sodium battery.

In any embodiment, the secondary battery further includes a negative electrode plate, the negative electrode plate includes a negative electrode current collector and a bottom coating arranged on at least one surface of the negative electrode current collector, and the bottom coating includes one or more of a carbon nanotube, graphite, graphene, a silver-carbon composite nanoparticle, and a tin-carbon composite nanoparticle.

The bottom coating described above not only has excellent electrical conductivity, but is also conducive to the uniform deposition of metal ions on the surface of the current collector, thereby improving the cycle performance and safety of the battery.

In any embodiment, the surface density of the bottom coating is 5 g/m² to 50 g/m².

The bottom coating with a surface density of 5 g/m² to 50 g/m² is conducive to the uniform distribution of nucleation sites, promotes the uniform deposition of metals, and does not affect the transmission of electrons.

In any embodiment, the thickness of the bottom coating is 2 µm to 100 µm.

The thickness of the bottom coating is controlled to be 2 µm to 100 µm, and thus sufficient nucleation sites can be provided, which is conducive to the uniform deposition of metal ions, thereby inhibiting dendrite formation.

In a fourth aspect of the present application, provided is a battery module, which includes the secondary battery according to the third aspect of the present application.

In a fifth aspect of the present application, provided is a battery pack, which includes the secondary battery according to the third aspect of the present application or the battery module according to the fourth aspect of the present application.

In a sixth aspect of the present application, provided is an electric device, which includes at least one of the secondary battery according to the third aspect of the present application, the battery module according to the fourth aspect of the present application, and the battery pack according to the fifth aspect of the present application.

### BRIEF DESCRIPTION OF THE DRAWINGS

FIG. 1 is a schematic diagram of a secondary battery according to one embodiment of the present application;
FIG. 2 is an exploded view of the secondary battery according to one embodiment of the present application as shown in FIG. 1;
FIG. 3 is a schematic diagram of a battery module according to one embodiment of the present application;
FIG. 4 is a schematic diagram of a battery pack according to one embodiment of the present application;
FIG. 5 is an exploded view of the battery pack according to one embodiment of the present application as shown in FIG. 4;
FIG. 6 is a schematic diagram of an electric device using a secondary battery as a power source according to one embodiment of the present application.

### Description of the reference numerals:

1: battery pack; 2: upper case body; 3: lower case body; 4: battery module; 5: secondary battery; 51: housing; 52: electrode assembly; 53: cover plate.

### DETAILED DESCRIPTION

Hereinafter, embodiments specifically disclosing the positive electrode active material and the preparation method therefor, the secondary battery, the battery module, the battery pack, and the electric device of the present application are described in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the prior art, polyanionic compounds have become one of the popular positive electrode materials for sodium batteries due to their abundant resources, environmental friendliness, convenience for large-scale production, open sodium ion diffusion channels, and good thermal stability and cycle stability. However, in the actual production process, researchers have found that the polyanionic compound material exhibits a high residual alkali content on the surface, which tends to increase when the material is exposed to air, causing deterioration in specific capacity and thus affecting the performance of the battery. Therefore, it is necessary to develop a positive electrode active material with a low residual alkali content and excellent electrochemical performance, which can be used for high-rate batteries to meet the application requirements of the new generation of electrochemical systems.

### [Positive Electrode Active Material]

Based on this, the present application provides a positive electrode active material for use in a secondary battery, which includes a carbon material-composited iron-based polyanionic compound and a magnesium-containing oxide, and the iron-based polyanionic compound has the following general formula: Na₄Fe₃₋ₓMₓMg_{y}(PO₄)₂P₂O₇/C, where M includes a transition metal element, 0 ≤ x ≤ 0.5, and 0 < y < 0.18.

The term "transition metal element" used herein refers to the elements of Groups IIIB to VIIB and VIII, and Groups IB to IIB in the Periodic Table of the Elements.

In some embodiments, x may be 0, 0.1, 0.15, 0.2, 0.25, 0.3, 0.35, 0.4, 0.45, or 0.5.

In some embodiments, y may be 0.02, 0.04, 0.06, 0.08, 0.10, 0.12, 0.14, 0.16, or 0.17.

By introducing a magnesium element into the positive electrode active material, in one aspect, a portion of the magnesium element can be doped into the lattice of the iron-based polyanionic compound to replace the iron element or the transition metal element in the lattice of the iron-based polyanionic compound, thereby enhancing the ionic conductivity and electronic conductivity of the positive electrode active material, and improving ion-conducting and electron-conducting properties of the positive electrode active material. In another aspect, a portion of the magnesium element is distributed on the surface of the iron-based polyanionic compound in the form of a magnesium-containing oxide, which reduces the direct contact between the surface of the positive electrode active material and the moisture in the environment, lowers the residual alkali content of the positive electrode active material, and improves the stability and processability of the positive electrode active material. Moreover, the positive electrode active material also has a high specific capacity, which is conducive to improving the energy density of the battery.

By introducing a carbon material into the positive electrode active material, the electrical conductivity of the positive electrode active material and battery performance can be effectively improved.

The term "specific capacity" used herein refers to the amount of electricity released per gram of the positive electrode active material, which can reflect the capacity of the battery and can be tested by any known method.

In some embodiments, the magnesium-containing oxide is distributed on at least a portion of the surface of a primary particle of the iron-based polyanionic compound.

Herein, the term "primary particle" refers to particles of the iron-based polyanionic compound before agglomeration, and the particle size of the primary particles of the iron-based polyanionic compound ranges from 30 nm to 120 nm.

In some embodiments, the magnesium-containing oxide includes magnesium oxide.

In some embodiments, the magnesium-containing oxide is distributed on a portion of the surface of a primary particle of the iron-based polyanionic compound.

In some embodiments, the magnesium-containing oxide is distributed on the entire surface of a primary particle of the iron-based polyanionic compound.

The magnesium-containing oxide is distributed on either a portion of the surface or the entire surface of a primary particle of the iron-based polyanionic compound, which can effectively reduce the direct contact between the positive electrode active material and the moisture in the environment, lower the residual alkali content of the positive electrode active material, and improve the stability and processability of the positive electrode active material.

In some embodiments, the mass content of the magnesium element in the positive electrode active material is 0.02% to 0.7% based on the total mass of the positive electrode active material. In some embodiments, the mass content of the magnesium element in the positive electrode active material may be 0.02%, 0.05%, 0.1%, 0.15%, 0.2%, 0.25%, 0.3%, 0.35%, 0.4%, 0.45%, 0.5%, 0.55%, 0.6%, 0.65%, or 0.7% based on the total mass of the positive electrode active material.

In some embodiments, the magnesium element in the positive electrode active material includes Mg in the iron-based polyanionic compound and magnesium in the magnesium-containing oxide.

The mass content of the magnesium element in the positive electrode active material can be tested by any means known in the art. As an example, reference can be made to the standard YS/T 1006.2-2014, GB/T 23367.2-2009, or YS/T 1028.5-2015. Specifically, an inductively coupled plasma optical emission spectrometer (Thermo, ICAP7400; PerkinElmer, Avio200) can be used to measure the emission intensity of the magnesium element in the test sample. Standard samples with different contents of magnesium element are prepared, and their emission intensities are measured to establish a standard curve. The mass content of the magnesium element in the test sample is quantified by matching its emission intensity to the standard curve.

The mass content of the magnesium element in the positive electrode active material is controlled to be 0.02% to 0.7% based on the total mass of the positive electrode active material, which is conducive to reducing the residual alkali content of the positive electrode active material and improving the stability and processability of the positive electrode active material, thereby increasing the specific capacity of the positive electrode active material and the capacity retention rate of the battery at 3C rate and improving the cycle performance and rate capability of the battery.

In some embodiments, M includes one or more of Ni, Co, Mn, Cu, V, Ti, Mo, Nb, W, Cr, Zn, Zr, and Ca, optionally one or more of Ni, Co, Mn, Cu, V, and Ca.

In some embodiments, M includes Ni. In some embodiments, M includes Co. In some embodiments, M includes Mn. In some embodiments, M includes Ca. In some embodiments, M includes Cu.

The doping of transition metal elements into an iron-based polyanionic compound is conducive to increasing the voltage plateau of the positive electrode active material, improving the ionic conductivity and electronic conductivity of the material, and reducing battery polarization, thereby improving the cycle performance and rate capability of the battery.

In some embodiments, M includes at least two of Ni, Co, Mn, Cu, V, and Ca.

In some embodiments, M includes Ni and Mn. In some embodiments, M includes Mn and Co. In some embodiments, M includes Ni and Co. In some embodiments, M includes Ni and Ca. In some embodiments, M includes Mn, Ni, and Co.

M is controlled to include at least two of Ni, Co, Mn, Cu, V, and Ca, which is conducive to further improving the rate capability of the battery.

In some embodiments, the surface of the iron-based polyanionic compound is coated with the carbon material in the form of a carbon film, or the carbon material is distributed between primary ions of the iron-based polyanionic compound in the form of particles.

In some embodiments, the surface of the iron-based polyanionic compound is coated with the carbon material in the form of a carbon film.

In some embodiments, the carbon material is distributed between primary ions of the iron-based polyanionic compound in the form of particles.

The surface of the iron-based polyanionic compound is coated with the carbon material in the form of a carbon film, or the carbon material is distributed between primary ions of the iron-based polyanionic compound in the form of particles, either of which can effectively improve the electrical conductivity of the positive electrode active material and the battery performance.

In some embodiments, the carbon material includes one or more of amorphous carbon, conductive carbon black, a carbon nanotube, and graphene.

In some embodiments, the carbon material includes amorphous carbon. In some embodiments, the carbon material includes conductive carbon black. In some embodiments, the carbon material includes graphene. In some embodiments, the carbon material includes a carbon nanotube.

The carbon material described above readily composites with the iron-based polyanionic compound, and thus the conductive property of the positive electrode active material is improved. Since the crystallinity of conductive carbon black, a carbon nanotube, or graphene is higher than that of amorphous carbon, the electrical conductivity of the carbon material including conductive carbon black, a carbon nanotube, or graphene is better than that of the carbon material including amorphous carbon.

In some embodiments, the mass content of the carbon material is 0.5% to 6%, optionally 1% to 3.6%, based on the total mass of the positive electrode active material. In some embodiments, the mass content of the carbon material may be 0.5%, 1%, 1.1%, 1.5%, 2%, 2.5%, 3%, 3.5%, 3.6%, 4%, 4.5%, 5%, 5.5%, or 6% based on the total mass of the positive electrode active material.

The mass content of the carbon material is controlled to be 0.5% to 6% based on the total mass of the positive electrode active material, which is conducive to achieving a balance between the specific capacity and the electrical conductivity of the positive electrode active material, while also attaining a higher specific capacity and better cycle performance and rate capability. It should be avoided that the mass content of the carbon material is too low, which leads to poor electrical conductivity of the positive electrode active material and thus adversely affects the capacity volatilization of the positive electrode active material; it should be also avoided that the mass content of the carbon material is too high, which leads to a decrease in the specific capacity and an effect on the compacted density of the positive electrode active material. The mass content of the carbon material is controlled to be 1% to 3.6% based on the total mass of the positive electrode active material, which is conducive to further increasing the specific capacity of the positive electrode active material, thereby further improving the capacity of the battery.

In some embodiments, the specific capacity of the positive electrode active material is ≥ 98 mAh/g.

In some embodiments, the specific capacity of the positive electrode active material may be 98 mAh/g, 100 mAh/g, 105 mAh/g, 110 mAh/g, 115 mAh/g, 120 mAh/g, or 125 mAh/g.

The specific capacity of the positive electrode active material can be tested by any means known in the art. As an example, at 25 °C and normal pressure, a button battery is charged at a constant current rate of 0.1 C to a voltage of 4 V, and then charged at a constant voltage of 4 V until the current drops to 0.05 C, and the charge-specific capacity at this time is recorded as the first desodiation capacity. Subsequently, the battery is discharged at a constant current rate of 0.1 C to a voltage of 1.5 V, and the discharge-specific capacity at this time is recorded as the first sodiation capacity. The specific capacity of the positive electrode active material is the first sodiation capacity.

Positive electrode active materials with a specific capacity of ≥ 98 mAh/g are conducive to improving the capacity of batteries and broadening the application of batteries.

In some embodiments, the residual alkali content of NaHCO₃ in the positive electrode active material is less than 1.2% based on the total mass of the positive electrode active material.

In some embodiments, the residual alkali content of NaHCO₃ in the positive electrode active material may be 0.01%, 0.05%, 0.1%, 0.2%, 0.3%, 0.4%, 0.5%, 0.6%, 0.7%, 0.8%, 0.9%, 1%, 1.1%, or 1.15% based on the total mass of the positive electrode active material.

The residual alkali content of NaHCO₃ in the positive electrode active material can be tested by any means known in the art. As an example, the residual alkali content is determined through a potentiometric titration method using chemical reagents. For example, reference can be made to the standard GB/T 9725-2007. Specifically, a Metrohm 905 Titrando potentiometric titrator can be used. The positive electrode active material is dissolved in deionized water, and the aqueous positive electrode active material solution is titrated with a standard titration solution. For each addition of 0.1 mL of the standard titration solution, the potential or pH value is recorded. The titration is stopped when the potential or pH value shows slight variation. The volume of the added standard titration solution and the measured potential or pH value are recorded, the titration end point is determined using a graphical method or the second derivative method, and the titration volume of the standard titration solution is determined. The mass of NaHCO₃ obtained through calculation is divided by the mass of the positive electrode active material, and the mass content is taken as the residual alkali content of NaHCO₃ in the positive electrode active material.

The residual alkali content of NaHCO₃ in the positive electrode active material is less than 1.2% based on the total mass of the positive electrode active material, which can effectively improve the stability and processability of the positive electrode active material.

The present application further provides a preparation method for a positive electrode active material for use in a secondary battery. The method includes the following steps:
dissolving raw materials including an iron source, a sodium source, a phosphorus source, and a magnesium source in water to obtain a mixed slurry, where the raw materials optionally include an M source, and the M source includes a salt containing a transition metal; and
drying and then calcining the mixed slurry to prepare the positive electrode active material including an iron-based polyanionic compound and a magnesium-containing oxide, where the iron-based polyanionic compound has the following general formula:

   Na₄Fe₃₋ₓMₓMg_{y}(PO₄)₂P₂O₇/C,
where M includes a transition metal element, 0 ≤ x ≤ 0.5, and 0 < y < 0.18.

The preparation method for the positive electrode active material described above is simple and the production cost is low. The prepared positive electrode active material has a relatively low residual alkali content and a high specific capacity, and the battery has excellent cycle performance and rate capability.

The introduction of transition metals into the positive electrode active material is conducive to improving the ionic conductivity and electronic conductivity of the material and thus improving the cycle performance and rate capability of the battery.

In some embodiments, the raw material further includes a carbon source.

The addition of the carbon source is conducive to introducing a conductive carbon element into the positive electrode active material and thus improving the electrical conductivity of the positive electrode active material.

In some embodiments, drying and then calcining the mixed slurry includes the following steps:
drying the mixed slurry to obtain a precursor powder; and
subjecting the precursor powder to a stepwise calcination process, with the temperature of the first calcination step being 300 °C to 400 °C and the time being 3 h to 6 h, and the temperature of the second calcination step being 500 °C to 600 °C and the time being 8 h to 15 h, to prepare the positive electrode active material.

Stepwise calcination is conducive to the complete reaction of the precursor powder, which enhances the crystallinity and phase purity of the prepared positive electrode active material, reduces the residual alkali content on the surface of the positive electrode active material, improves the stability and processability of the positive electrode active material, and increases the specific capacity of the positive electrode active material, thereby improving the cycle performance and rate capability of the battery.

In some embodiments, the temperature of the second calcination step is 525 °C to 575 °C, optionally 550 °C to 575 °C.

The temperature of the second calcination step is controlled to be 525 °C to 575 °C, which is conducive to further reducing the residual alkali content on the surface of the active material and improving the electrical conductivity of the material, thereby improving the cycle performance and rate capability of the battery. The temperature of the second calcination step is further controlled to be 550 °C to 575 °C, which is conducive to improving the cycle performance and rate capability of the battery to a greater extent.

In some embodiments, the time of the second calcination step is 10 h to 14 h.

The time of the second calcination step is controlled to be 10 h to 14 h, which is conducive to obtaining a positive electrode active material with high crystallinity and high purity. At the same time, by controlling the holding time, the particle size of the primary crystal grains and the residual alkali content on the surface of the material can be controlled, thereby improving the specific capacity of the material and the cycle rate capability of the battery.

**In** some embodiments, the M source includes one or more of nickel nitrate, nickel acetate, cobalt nitrate, manganese nitrate, cobalt acetate, manganese acetate, nickel oxalate, cobalt oxalate, manganese oxalate, nickel oxide, cobalt oxide, and manganese oxide.

**In** some embodiments, the magnesium source includes one or more of magnesium nitrate, magnesium carbonate, magnesium acetate, magnesium hydroxide, magnesium oxalate, and magnesium oxide.

**In** some embodiments, the carbon source includes one or more of sucrose, tannic acid, polyethylene glycol, polyacrylonitrile, cellulose, polyvinylpyrrolidone, sucrose, oxalic acid, glucose, ascorbic acid, polyethylene, citric acid, conductive carbon black, a carbon nanotube, and graphene.

**In** some embodiments, the carbon source includes one or more of sucrose, tannic acid, polyethylene glycol, polyacrylonitrile, cellulose, polyvinylpyrrolidone, sucrose, oxalic acid, glucose, ascorbic acid, polyethylene, and citric acid.

**In** some embodiments, the carbon source includes one or more of conductive carbon black, a carbon nanotube, and graphene.

The carbon source described above, when calcined at high temperatures, readily generates a carbon material that either coats the surface of the iron-based polyanionic compound or is distributed between primary particles of the iron-based polyanionic compound, thereby improving the electrical conductivity of the positive electrode active material. Due to the influence of the calcination temperature, the amorphous carbon formed by the carbon source including one or more of sucrose, tannic acid, polyethylene glycol, polyacrylonitrile, cellulose, polyvinylpyrrolidone, sucrose, oxalic acid, glucose, ascorbic acid, polyethylene, citric acid, conductive carbon black, a carbon nanotube, and graphene has relatively low crystallinity, while the carbon material generated by the carbon source including one or more of conductive carbon black, a carbon nanotube, and graphene has relatively high crystallinity. Therefore, the carbon material generated by the carbon source including one or more of conductive carbon black, a carbon nanotube, and graphene has more excellent conductive property.

### [Positive Electrode Plate]

A positive electrode plate includes a positive electrode current collector and a positive electrode active material layer formed on at least a portion of the surface of the positive electrode current collector, where the positive electrode active material layer includes the positive electrode active material according to some embodiments.

The positive electrode active material layer may also include a conductive agent to improve the conductive property of the positive electrode. The conductive agent is optionally one or more of super P, acetylene black, carbon black, Ketjen black, a carbon dot, a carbon nanotube, graphite, graphene, and a carbon nanofiber.

The positive electrode active material layer may also include a binder to firmly bond the positive electrode active material and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrenebutadiene rubber (SBR), carboxymethyl cellulose (CMC), sodium alginate (SA), polymethacrylic acid (PMA), and carboxymethyl chitosan (CMCS).

The positive electrode current collector may be made of a conductive carbon plate, a metal foil, a carbon-coated metal foil, a porous metal plate, or a composite current collector. The conductive carbon material of the conductive carbon plate is optionally one or more of super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Separation Film]

In some embodiments, the secondary battery further includes a separation film. The present application does not particularly limit the type of the separation film, and any porous-structure separation film known to have good chemical stability and mechanical stability may be selected and used.

In some embodiments, the material of the separation film may be selected from at least one of polyethylene, polypropylene, polyvinylidene fluoride, aramid, polyethylene terephthalate, polytetrafluoroethylene, polyacrylonitrile, polyimide, polyamide, polyester, and a natural fiber. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, a steel shell, or the like. The outer packaging of the secondary battery may also be a soft pack, such as a pouch-type soft pack. The soft pack may be made of plastic, and examples of the plastic include polypropylene, polybutylene terephthalate, polybutylene succinate, and the like.

### [Secondary Battery]

A secondary battery includes a positive electrode plate, where the positive electrode plate includes the positive electrode active material according to some embodiments or the positive electrode active material prepared by the preparation method according to some embodiments.

In some embodiments, the secondary battery further includes a negative electrode plate, a separation film, and an electrolytic solution.

In some embodiments, the secondary battery is a negative electrode-free sodium battery.

In the negative electrode-free sodium battery, no negative electrode active material is predeposited, and only a negative electrode current collector is included. During the first charge, sodium ions gain electrons at the positive electrode side and are deposited as sodium metal on the surface of the current collector to form a sodium metal phase. During discharge, the sodium metal can be converted into sodium ions and return to the positive electrode, thus achieving cyclic charge and discharge. Compared to other sodium secondary batteries, the negative electrode-free sodium battery can achieve higher energy density due to the absence of limitations imposed by the negative electrode material. There is insufficient sodium metal in the negative electrode-free sodium battery as a negative electrode material to provide sufficient sodium element to the battery. Therefore, the positive electrode active material provided in the present application can more effectively improve the cycle performance and high rate capability of the secondary battery.

In some embodiments, the CB value of the negative electrode-free sodium battery is less than or equal to 0.1.

The CB value is defined as the ratio of the unit area capacity of the negative electrode plate to the unit area capacity of the positive electrode plate in a secondary battery. Since the negative electrode-free battery includes no negative electrode active material, the unit area capacity of the negative electrode plate is relatively small, and the CB value of the secondary battery is less than or equal to 0.1.

In some embodiments, the secondary battery includes a negative electrode plate, and the negative electrode plate may only include a negative electrode current collector and not include a negative electrode active material. In some embodiments, the negative electrode plate may also have a metal phase predeposited on the negative electrode current collector.

In some embodiments, a metal foil or a composite current collector may be used as the negative electrode current collector. For example, as the metal foil, an aluminum foil or a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a bottom coating arranged on at least one surface of the negative electrode current collector, where the bottom coating includes one or more of a carbon nanotube, graphite, graphene, a silver-carbon composite nanoparticle, and a tin-carbon composite nanoparticle.

The bottom coating described above not only has excellent electrical conductivity, but also facilitates the uniform deposition of metal ions on the surface of the current collector of the negative electrode-free battery, thereby improving the cycle performance and safety of the battery.

In some embodiments, the surface density of the bottom coating is 5 g/m² to 50 g/m².

In some embodiments, the surface density of the bottom coating is optionally 5 g/m², 10 g/m², 15 g/m², 20 g/m², 25 g/m², 30 g/m², 35 g/m², 40 g/m², 45 g/m², or 50 g/m².

The bottom coating with a surface density of 5 g/m² to 50 g/m² is conducive to the uniform distribution of negative electrode nucleation sites in the negative electrode-free battery, promotes the uniform deposition of metals, and does not affect the transmission of electrons.

In some embodiments, the thickness of the bottom coating is 2 µm to 100 µm.

In some embodiments, the thickness of the bottom coating is optionally 2 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm.

The bottom coating described above is thin and cannot be used as a negative electrode active material. However, it is used as a bottom coating in a negative electrode-free sodium battery to reduce the nucleation overpotential of sodium, which is conducive to the uniform deposition of metal ions and inhibits dendrites.

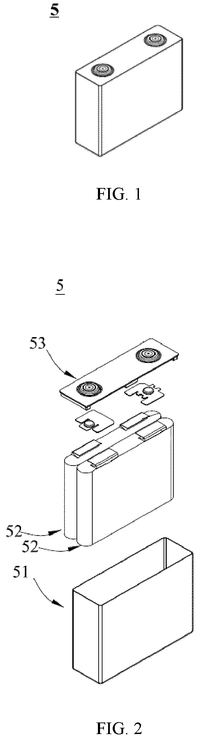

The present application does not particularly limit the shape of the secondary battery, and it may have a cylindrical shape, a prismatic shape, or any other shape. For example, FIG. 1 shows a secondary battery 5 having a prismatic structure as one example, and FIG. 2 shows an exploded view of the secondary battery 5.

In some embodiments, referring to FIG. 2, the outer packaging may include a housing 51 and a cover plate 53. The housing 51 may include a bottom plate and a side plate connected to the bottom plate, and the bottom plate and the side plate define an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The non-Newtonian fluid electrolyte composition is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

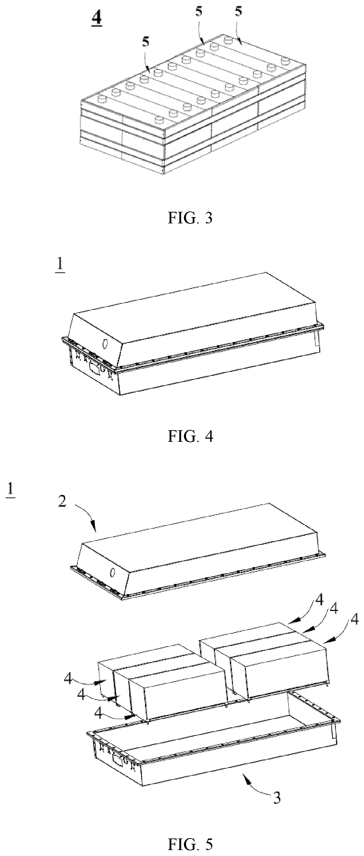

FIG. 3 shows a battery module 3 as one example. Referring to FIG. 3, in the battery module 3, a plurality of secondary batteries 5 may be sequentially arranged in a length direction of the battery module 3. Certainly, the arrangement may also be in any other manner. Further, the plurality of secondary batteries 5 may be fixed by a fastener.

Optionally, the battery module 3 may further include a shell having an accommodating space in which the plurality of secondary batteries 5 are accommodated.

In some embodiments, the battery module described above may also be assembled into a battery pack. The number of the battery modules included in the battery pack may be one or more, and the specific number may be selected by those skilled in the art based on the use and capacity of the battery pack.

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

### [Electric Device]

In one embodiment of the present application, provided is an electric device, which includes at least one of the secondary battery according to any embodiment, the battery module according to any embodiment, or the battery pack according to any embodiment.

The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As an electric device, a secondary battery, a battery module, or a battery pack may be selected based on its use requirements.

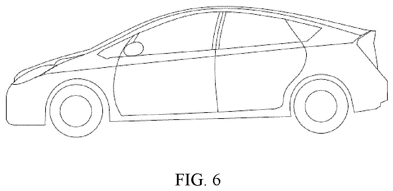

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

### Examples

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

### I. Preparation method

### Example 1

### 1) Preparation of positive electrode active material

0.1 mol sodium pyrophosphate, 0.3 mol ferrous oxalate, 0.2 mol ammonium dihydrogen phosphate, 0.01 mol glucose, and 0.006 mol magnesium acetate were added to 200 mL of deionized water, and the mixture was ground by a sand mill for 10 h to obtain a mixed slurry; the mixed slurry was dried by a spray drying device to obtain a dry precursor powder; the precursor was placed in a tube furnace, and nitrogen was introduced as a protective gas; and the first calcination step was carried out by heating to 300 °C and holding for 4 h, followed by the second calcination step by heating to 550 °C and holding for 12 h, and a positive electrode active material was obtained.

### 2) Preparation of positive electrode plate

10 wt% polyvinylidene fluoride binder was thoroughly dissolved in N-methylpyrrolidone (NMP), and 10 wt% carbon black conductive agent and 80 wt% of the positive electrode active material described above were then added. The mixture was stirred and uniformly mixed to obtain a positive electrode slurry. The surface of the current collector aluminum foil was coated with the slurry evenly, and the current collector aluminum foil was then transferred to a vacuum drying oven for complete drying. The dried electrode plate was calendered and then punched to obtain a positive electrode plate.

### 3) Preparation of negative electrode plate

The carbon nanotube and carboxymethyl cellulose (CMC) were added to deionized water in a mass ratio of 1:0.4, and the mixture was stirred to obtain a uniform slurry. The surface of the negative electrode current collector copper foil was coated with the slurry to form a bottom coating, which was then transferred to a vacuum drying oven for complete drying and then punched. The bottom coating had a thickness of 20 µm and a surface density of 25 g/m². A negative electrode plate without a negative electrode structure was obtained.

### 4) Electrolytic solution

In a glove box under argon atmosphere (H₂O < 0.1 ppm, O₂ < 0.1 ppm), a sodium salt sodium hexafluorophosphate (NaPF₆) was dissolved in an organic solvent dimethoxyethane (DME), and the mixture was uniformly stirred to obtain an electrolytic solution with a sodium salt concentration of 1 mol/L.

### 5) Separation film

A polypropylene film is used as the separation film.

### 6) Preparation of button battery

The button battery was assembled by using a sodium metal plate as a counter electrode, using a Celgard 2400 separation film, and injecting an electrolytic solution.

### 7) Preparation of full battery

The positive electrode plate, the separation film, and the negative electrode plate were stacked in sequence, with the separation film positioned between the positive electrode plate and the negative electrode plate to provide isolation. The electrolytic solution described above was then added, and a stacked battery was assembled. The negative electrode-free sodium battery product of Example 1 was obtained.

### Examples 2 to 6

The batteries of Examples 2 to 6 were prepared using a method similar to that of Example 1, except that the mass content of the carbon element in the positive electrode active material was adjusted. The specific parameters are shown in Table 1.

### Example 7

The battery of Example 7 was prepared using a method similar to that of Example 1, except that the preparation method for the positive electrode active material was adjusted. The specific preparation method is as follows:

0.1 mol sodium pyrophosphate, 0.28 mol ferrous oxalate, 0.2 mol ammonium dihydrogen phosphate, 0.04 mol glucose, 0.02 mol manganese oxalate (M source), and 0.006 mol magnesium acetate were added to 200 mL of deionized water, and the mixture was ground by a sand mill for 10 h to obtain a mixed slurry; the mixed slurry was dried by a spray drying device to obtain a dry precursor powder; the precursor powder was placed in a tube furnace, and nitrogen was introduced as a protective gas; and the temperature was increased to 300 °C and held for 4 h, and then increased to 550 °C and held for 12 h, and a positive electrode active material was obtained.

### Examples 8 to 12

The batteries of Examples 8 to 12 were prepared using a method similar to that of Example 7, except that the x value of the Mn element in the iron-based polyanionic compounds was adjusted. The specific parameters are shown in Table 1.

### Examples 13 to 17

The batteries of Examples 13 to 17 were prepared using a method similar to that of Example 7, except that the mass content of the magnesium element in the positive electrode active material was adjusted. The specific parameters are shown in Table 1.

### Examples 18 to 25

The batteries of Examples 18 to 25 were prepared using a method similar to that of Example 7, except that the temperature and the time of the second calcination step were adjusted, respectively. The specific parameters are shown in Table 1.

### Examples 26 to 31

The batteries of Examples 26 to 31 were prepared using a method similar to that of Example 7, except that the type and the combination of transition metal elements in the iron-based polyanionic compounds were adjusted. The specific parameters are shown in Table 1.

### Comparative Example 1

The battery of Comparative Example 1 was prepared using a method similar to that of Example 1, except that the preparation method of the positive electrode active material was adjusted. The preparation method is as follows:

0.1 mol sodium pyrophosphate, 0.3 mol ferrous oxalate, and 0.2 mol ammonium dihydrogen phosphate were added to 200 mL of water, and the mixture was ground by a sand mill for 10 h to obtain a mixed slurry; the mixed slurry was dried by a spray drying device to obtain a dry precursor powder; the precursor was placed in a tube furnace, and nitrogen was introduced as a protective gas; and the first calcination step was carried out by heating to 300 °C and holding for 4 h, followed by the second calcination step by heating to 550 °C and holding for 12 h, and a positive electrode active material was obtained.

### Comparative Example 2

The battery of Comparative Example 2 was prepared using a method similar to that of Comparative Example 1, except that a carbon material was introduced into the positive electrode active material. The specific parameters are shown in Table 1.

### Comparative Example 3

The battery of Comparative Example 3 was prepared using a method similar to that of Comparative Example 2, except that a magnesium element was introduced into the positive electrode active material. The specific parameters are shown in Table 1.

### Comparative Examples 4 to 5

The batteries of Comparative Examples 4 to 5 were prepared using a method similar to that of Comparative Example 1, except that Mn elements with different x values were introduced into the positive electrode active material. The specific parameters are shown in Table 1.

### II. Performance test

### 1. Performance test of positive electrode active material

### 1) Test of magnesium element content

The composition of the positive electrode active material was determined through inductively coupled plasma (ICP) spectroscopy analysis. For example, reference can be made to the standard YS/T 1006.2-2014, GB/T 23367.2-2009, or YS/T 1028.5-2015. Specifically, an inductively coupled plasma optical emission spectrometer (Thermo, ICAP7400; PerkinElmer, Avio200) can be used to measure the emission intensity of the magnesium element in the test sample. Standard samples with different contents of magnesium element are prepared, and their emission intensities are measured to establish a standard curve. The mass content of the magnesium element in the test sample is quantified by matching its emission intensity to the standard curve.

### 2) Test of NaHCO₃ residual alkali content

The residual alkali content of the prepared positive electrode active material was tested. In the present application, the residual alkali content of NaHCO₃ refers to the mass content of the measured mass of NaHCO₃ in the positive electrode active material. The residual alkali content was determined through a potentiometric titration method using chemical reagents. For example, reference can be made to the standard GB/T 9725-2007. Specifically, a Metrohm 905 Titrando potentiometric titrator can be used. The positive electrode active material was dissolved in deionized water, and the aqueous positive electrode active material solution was titrated with a standard titration solution. For each addition of 0.1 mL of the standard titration solution, the potential or pH value was recorded. The titration was stopped when the potential or pH value showed slight variation. The volume of the added standard titration solution and the measured potential or pH value were recorded, the titration end point was determined using a graphical method or the second derivative method, and the titration volume of the standard titration solution was determined. The mass of NaHCO₃ obtained through calculation was divided by the mass of the positive electrode active material, and the mass content was taken as the residual alkali content of NaHCO₃ in the positive electrode active material.

### 2. Test of battery performance

### 1) Specific capacity test of button battery

The process for testing the specific capacity of the button battery was as follows: At 25 °C and normal pressure, the button battery was charged at a constant current rate of 0.1 C to a voltage of 4 V, and then charged at a constant voltage of 4 V until the current dropped to 0.05 C, and the charge-specific capacity at this time was recorded as the first desodiation capacity. Subsequently, the battery was discharged at a constant current rate of 0.1 C to a voltage of 1.5 V, and the discharge-specific capacity at this time was recorded as the first sodiation capacity. The specific capacity of the positive electrode active material was the first sodiation capacity.

### 2) Capacity retention rate test of the full battery after cycling

The process for testing the capacity retention rate of the full battery was as follows: The prepared full battery was charged to 3.7 V at a constant current of 1 C at 25 °C, then charged at a constant voltage of 3.7 V until the current dropped to 0.05 C, and then discharged to 1.5 V at 1 C. The obtained capacity was recorded as the initial capacity (C0). The steps described above were repeated for the same full battery, and the discharge capacity (Cn) of the full battery after the nth cycle was recorded at the same time. The full battery capacity retention rate after each cycle was calculated as Pn = Cn/C0 × 100%. A curve of the full battery capacity retention rate versus the number of cycles was obtained, with the 200 point values of P1, P2, ..., and 200 as the vertical coordinate and the corresponding cycle numbers as the horizontal coordinate. In this test process, the first cycle corresponded to n = 1, the second cycle corresponded to n = 2, ..., and the 200th cycle corresponded to n = 200. The data for the full battery capacity retention rates corresponding to the examples or comparative examples in Table 1 were measured after 200 cycles under the test conditions described above, that is, the value of P200. The test process of the comparative examples and other examples was the same as above.

### 3) Test of rate capability

The process for testing the rate capability was as follows: At 25 °C, the prepared battery was placed in a constant temperature chamber at 25 °C and left to stand for 30 min to reach a constant temperature. After reaching the constant temperature, at 25 °C, the battery was charged at a constant current of 0.33 C to 3.7 V, and then charged at a constant voltage of 3.7 V to 0.05 C; the battery was left to stand for 5 min, and then discharged at a constant current of 0.33 C to 1.5 V; the battery was left to stand for 5 min to obtain the discharge capacity C1 at 0.33 C; subsequently, the battery was charged at a constant current of 0.33 C to 3.7 V, and then charged at a constant voltage of 3.7 V to 0.05 C; the battery was left to stand for 5 min, and then discharged at a constant current of 3 C to 1.5 V; the battery was left to stand for 5 min to obtain the discharge capacity C2 at 3 C. The capacity retention rate at 3C rate was then calculated as R = C2/C1 × 100%. The test process of the comparative examples and other examples was the same as above.

### III. Analysis of test results of examples and comparative examples

The batteries of the examples and comparative examples were prepared according to the methods described above, and various performance parameters were measured. The results are shown in Table 1 below.

**Table 1**

| No. | Positive electrode active material | | | | | | | | Battery | |
|---|---|---|---|---|---|---|---|---|---|---|
| | Transition metal M | x Valu e | Mg element mass content/ % | Carbon material mass content/ % | Temperatu re of second sintering step/°C | Time of second sinterin g step/h | Residual alkali content/ % | Specific capacity/(mA·h/ g) | Capacit y retentio n rate after 200 cycles | Capacit y retentio n rate at 3C rate |
| Example 1 | / | 0 | 0.35 | 0.50 | 550 | 12 | 0.87 | 114.7 | 96.4% | 91.1% |
| Example 2 | / | 0 | 0.35 | 1.10 | 550 | 12 | 0.88 | 116.1 | 97.0% | 91.3% |
| Example 3 | / | 0 | 0.35 | 2.10 | 550 | 12 | 0.88 | 117.5 | 97.5% | 91.7% |
| Example 4 | / | 0 | 0.35 | 3.60 | 550 | 12 | 0.86 | 115 | 97.9% | 92.4% |
| Example 5 | / | 0 | 0.35 | 4.80 | 550 | 12 | 0.89 | 112.6 | 98.3% | 93.2% |
| Example 6 | / | 0 | 0.35 | 6.00 | 550 | 12 | 0.87 | 110.9 | 98.4% | 93.8% |
| Example 7 | Mn | 0.2 | 0.35 | 2.1 | 550 | 12 | 0.87 | 116.8 | 97.7% | 94.6% |
| Example 8 | Mn | 0.05 | 0.35 | 2.1 | 550 | 12 | 0.89 | 114 | 96.0% | 92.7% |
| Example 9 | Mn | 0.1 | 0.35 | 2.1 | 550 | 12 | 0.86 | 115.3 | 97.2% | 93.4% |
| Example 10 | Mn | 0.3 | 0.35 | 2.1 | 550 | 12 | 0.87 | 114 | 96.8% | 95.1% |
| Example 11 | Mn | 0.4 | 0.35 | 2.1 | 550 | 12 | 0.85 | 110.6 | 96.1% | 95.5% |
| Example 12 | Mn | 0.5 | 0.35 | 2.1 | 550 | 12 | 0.88 | 108.4 | 95.0% | 96.4% |
| Example 13 | Mn | 0.2 | 0.02 | 2.1 | 550 | 12 | 1.11 | 112.4 | 96.4% | 92.6% |
| Example 14 | Mn | 0.2 | 0.15 | 2.1 | 550 | 12 | 0.97 | 114.3 | 97.1% | 93.5% |
| Example 15 | Mn | 0.2 | 0.26 | 2.1 | 550 | 12 | 0.81 | 112 | 96.0% | 93.9% |
| Example 16 | Mn | 0.2 | 0.52 | 2.1 | 550 | 12 | 0.7 | 107.5 | 93.7% | 93.3% |
| Example 17 | Mn | 0.2 | 0.68 | 2.1 | 550 | 12 | 0.59 | 103.2 | 92.9% | 93.0% |
| Example 18 | Mn | 0.2 | 0.35 | 2.1 | 500 | 12 | 1.02 | 114.7 | 96.5% | 93.2% |
| Example 19 | Mn | 0.2 | 0.35 | 2.1 | 525 | 12 | 0.95 | 115.4 | 97.3% | 94.1% |
| Example 20 | Mn | 0.2 | 0.35 | 2.1 | 575 | 12 | 0.74 | 114.3 | 97.5% | 94.2% |
| Example 21 | Mn | 0.2 | 0.35 | 2.1 | 600 | 12 | 0.66 | 110.5 | 97.1% | 93.5% |
| Example 22 | Mn | 0.2 | 0.35 | 2.1 | 550 | 8 | 0.76 | 112.5 | 96.2% | 92.5% |
| Example 23 | Mn | 0.2 | 0.35 | 2.1 | 550 | 10 | 0.82 | 114.2 | 96.9% | 93.9% |
| Example 24 | Mn | 0.2 | 0.35 | 2.1 | 550 | 14 | 0.94 | 114.6 | 96.8% | 93.6% |
| Example 25 | Mn | 0.2 | 0.35 | 2.1 | 550 | 15 | 1.03 | 113.9 | 96.0% | 93.3% |
| Example 26 | Mn+Ni | 0.2 | 0.35 | 2.1 | 550 | 12 | 0.86 | 115.0 | 96.6% | 94.9% |
| Example 27 | Mn+Co | 0.2 | 0.35 | 2.1 | 550 | 12 | 0.87 | 113.8 | 97.0% | 94.8% |
| Example 28 | Mn+Ni+C o | 0.2 | 0.35 | 2.1 | 550 | 12 | 0.88 | 113.7 | 96.8% | 95.3% |
| Example 29 | Ni | 0.2 | 0.35 | 2.1 | 550 | 12 | 0.85 | 116.5 | 96.0% | 94.5% |
| Example 30 | Co | 0.2 | 0.35 | 2.1 | 550 | 12 | 0.88 | 115.3 | 96.7% | 94.7% |
| Example 31 | Ca | 0.1 | 0.35 | 2.1 | 550 | 12 | 0.86 | 113.1 | 96.9% | 94.2% |
| Comparati ve Example 1 | / | / | / | / | 550 | 12 | 1.89 | 90.1 | 85.2% | 78.0% |
| Comparati ve Example 2 | / | / | / | 2.1 | 550 | 12 | 1.86 | 96.5 | 95.2% | 87.7% |
| Comparati ve Example 3 | / | / | 0.97 | 2.1 | 550 | 12 | 0.67 | 78.6 | 81.2% | 77.6% |
| Comparati ve Example 4 | Mn | 0.1 | / | / | 550 | 12 | 1.90 | 91.2 | 84.4% | 79.1% |
| Comparati ve Example 5 | Mn | 0.3 | / | / | 550 | 12 | 1.93 | 88.6 | 83.8% | 80.0% |

According to the results described above, Examples 1 to 31 are all positive electrode active materials for use in a secondary battery, which includes an iron-based polyanionic compound and a magnesium-containing oxide, and the iron-based polyanionic compound has the following general formula: Na₄Fe₃₋ₓMₓMg_{y}(PO₄)₂P₂O₇/C, where M includes a transition metal element, 0 ≤ x ≤ 0.5, and 0 < y < 0.18.

It can be seen from the comparison between Examples 1 to 31 and Comparative Examples 1 to 2 that the doping of a magnesium element into an iron-based polyanionic compound and the residue of a magnesium source-derived oxide on the surface of the iron-based polyanionic compound effectively reduce the residual alkali content of the positive electrode active material, increase the specific capacity of the positive electrode active material, and increase the capacity retention rate of the battery at a high rate.

It can be seen from the comparison between Examples 1 to 31 and Comparative Example 3 that the y value in the positive electrode active material is controlled to be greater than 0 and less than 0.18, so as to increase the specific capacity of the positive electrode active material, and increase the capacity retention rate of the battery after 200 cycles and the capacity retention rate at 3C rate.

It can be seen from the comparison between Examples 7 to 31 and Comparative Examples 4 to 5 that, compared with traditional positive electrode active materials containing only transition metal elements, the positive electrode active material including a magnesium-containing oxide and a Mg-doped iron-based polyanionic compound is conducive to reducing the residual alkali content of the positive electrode active material, increasing the specific capacity of the positive electrode active material, and increasing the capacity retention rate of the battery after 200 cycles and the capacity retention rate at 3C rate.

It can be seen from the comparison between Examples 1 to 6 and Comparative Example 1 that based on the total mass of the positive electrode active material, the mass content of the carbon material is controlled to be 0.5% to 6%, which is conducive to improving the electrical conductivity of the positive electrode active material, increasing the specific capacity of the positive electrode active material, and increasing the capacity retention rate of the battery after 200 cycles and the capacity retention rate at 3C rate. It can be seen from the comparison of Examples 2 to 4 with Examples 1 and 5 to 6 that controlling the mass content of the carbon material to be 1% to 3.6% based on the total mass of the positive electrode active material is conducive to further increasing the specific capacity of the positive electrode active material.

It can be seen from the comparison between Examples 7 to 12 and Comparative Examples 4 to 5 that the x value of the transition metal element is controlled to be less than or equal to 0.5, which is conducive to reducing the residual alkali content of the positive electrode active material, increasing the specific capacity of the positive electrode active material, and increasing the capacity retention rate of the battery after 200 cycles and the capacity retention rate at 3C rate.

It can be seen from the comparison between Examples 7 and 13 to 17 and Comparative Example 2 that the introduction of a magnesium element and a magnesium-containing oxide into the positive electrode active material and controlling the total mass content of the magnesium element in the positive electrode active material to be 0.02% to 0.7% based on the total mass of the positive electrode active material is conducive to reducing the residual alkali content of the positive electrode active material, increasing the specific capacity of the positive electrode active material, and increasing the capacity retention rate of the battery at 3C rate.

It can be seen from the comparison of Examples 7 and 18 to 21 with Comparative Example 2 that controlling the calcination temperature to be 500 °C to 600 °C is conducive to reducing the residual alkali content of the positive electrode active material, increasing the specific capacity of the positive electrode active material, and increasing the capacity retention rate of the battery after 200 cycles and the capacity retention rate at 3C rate. It can be seen from the comparison of Examples 7 and 19 to 20 with Examples 18 and 21 that controlling the calcination temperature to be 525 °C to 575 °C is conducive to further increasing the specific capacity of the positive electrode active material and increasing the capacity retention rate of the battery after 200 cycles and the capacity retention rate at 3C rate. It can be seen from the comparison between Examples 7 and 20 with Examples 18 to 19 and 21 that controlling the calcination temperature to be 550 °C to 575 °C is conducive to increasing the capacity retention rate of the battery after 200 cycles and the capacity retention rate at 3C rate to a greater extent.

It can be seen from the comparison of Examples 7 and 22 to 25 with Comparative Example 2 that controlling the calcination time to be 8 h to 15 h is conducive to reducing the residual alkali content of the positive electrode active material, increasing the specific capacity of the positive electrode active material, and increasing the capacity retention rate of the battery after 200 cycles and the capacity retention rate at 3C rate. It can be seen from the comparison of Examples 7 and 23 to 24 with Comparative Examples 22 and 25 that controlling the calcination time to be 10 h to 14 h is conducive to further increasing the specific capacity of the positive electrode active material and increasing the capacity retention rate of the battery after 200 cycles and the capacity retention rate at 3C rate.

It can be seen from the comparison of Examples 7 and 26 to 31 with Comparative Examples 4 to 5 that controlling the transition metal elements in the positive electrode active material to include one or more of Ni, Co, Mn, and Ca is conducive to reducing the residual alkali content of the positive electrode active material, increasing the specific capacity of the positive electrode active material, and increasing the capacity retention rate of the battery after 200 cycles and the capacity retention rate at 3C rate.

It can be seen from the comparison of Example 26 with Examples 7 and 29, as well as Example 27 with Examples 7 and 30 that controlling the transition metal elements in the positive electrode active material to include two of Ni, Co, and Mn, rather than only one of Ni, Co, and Mn, is conducive to further increasing the capacity retention rate of the battery at 3C rate. It can be seen from the comparison of Example 28 with Examples 26 to 27 that controlling the transition metal elements in the positive electrode active material to include three of Ni, Co, and Mn, rather than only one of Ni, Co, and Mn, is conducive to increasing the capacity retention rate of the battery at 3C rate to a greater extent.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode active material for use in a secondary battery, wherein the positive electrode active material comprises a carbon material-composited iron-based polyanionic compound and a magnesium-containing oxide, and the iron-based polyanionic compound has the following general formula:
Na₄Fe₃₋ₓMₓMg_{y}(PO₄)₂P₂O₇/C,
wherein M comprises a transition metal element, 0 ≤ x ≤ 0.5, and 0 < y < 0.18.

2. The positive electrode active material according to claim 1, wherein the magnesium-containing oxide is distributed on at least a portion of the surface of a primary particle of the iron-based polyanionic compound.

3. The positive electrode active material according to claim 1 or 2, wherein a mass content of a magnesium element in the positive electrode active material is 0.02% to 0.7% based on a total mass of the positive electrode active material.

4. The positive electrode active material according to any one of claims 1 to 3, wherein M comprises one or more of Ni, Co, Mn, Cu, V, Ti, Mo, Nb, W, Cr, Zn, Zr, and Ca, optionally one or more of Ni, Co, Mn, Cu, V, and Ca.

5. The positive electrode active material according to any one of claims 1 to 4, wherein M comprises at least two of Ni, Co, Mn, Cu, V, and Ca.

6. The positive electrode active material according to any one of claims 1 to 5, wherein the surface of the iron-based polyanionic compound is coated with the carbon material in the form of a carbon film, or the carbon material is distributed between primary ions of the iron-based polyanionic compound in the form of particles.

7. The positive electrode active material according to any one of claims 1 to 6, wherein the carbon material comprises one or more of amorphous carbon, conductive carbon black, a carbon nanotube, and graphene.

8. The positive electrode active material according to any one of claims 1 to 7, wherein a mass content of the carbon material is 0.5% to 6%, optionally 1% to 3.6%, based on the total mass of the positive electrode active material.

9. The positive electrode active material according to any one of claims 1 to 8, wherein a specific capacity of the positive electrode active material is ≥ 98 mA h/g.

10. The positive electrode active material according to any one of claims 1 to 9, wherein a residual alkali content of NaHCO₃ in the positive electrode active material is less than 1.2% based on the total mass of the positive electrode active material.

11. A preparation method for a positive electrode active material for use in a secondary battery, comprising the following steps:
dissolving raw materials comprising an iron source, a sodium source, a phosphorus source, a magnesium source, and a carbon source in water to obtain a mixed slurry, wherein the raw materials optionally comprise an M source, and the M source comprises a salt containing a transition metal; and
drying and then calcining the mixed slurry to prepare the positive electrode active material comprising an iron-based polyanionic compound and a magnesium-containing oxide, wherein the iron-based polyanionic compound has the following general formula:
Na₄Fe₃₋ₓMₓMg_{y}(PO₄)₂P₂O₇/C,
wherein M comprises a transition metal element, 0 ≤ x ≤ 0.5, and 0 < y < 0.18.

12. The preparation method according to claim 11, wherein drying and then calcining the mixed slurry comprises the following steps:
drying the mixed slurry to obtain a precursor powder; and
subjecting the precursor powder to a stepwise calcination process, with a temperature of the first calcination step being 300 °C to 400 °C and a time being 3 h to 6 h, and a temperature of the second calcination step being 500 °C to 600 °C and a time being 8 h to 15 h, to prepare the positive electrode active material.

13. The preparation method according to claim 12, wherein the temperature of the second calcination step is 525 °C to 575 °C, optionally 550 °C to 575 °C.

14. The preparation method according to claim 12 or 13, wherein the time of the second calcination step is 10 h to 14 h.

15. The preparation method according to any one of claims 11 to 14, wherein the M source comprises one or more of nickel nitrate, nickel acetate, cobalt nitrate, manganese nitrate, cobalt acetate, manganese acetate, nickel oxalate, cobalt oxalate, manganese oxalate, nickel oxide, cobalt oxide, and manganese oxide.

16. The preparation method according to any one of claims 11 to 15, wherein the magnesium source comprises one or more of magnesium nitrate, magnesium carbonate, magnesium acetate, magnesium hydroxide, magnesium oxalate, and magnesium oxide.

17. The preparation method according to any one of claims 11 to 16, wherein the carbon source comprises one or more of sucrose, tannic acid, polyethylene glycol, polyacrylonitrile, cellulose, polyvinylpyrrolidone, sucrose, oxalic acid, glucose, ascorbic acid, polyethylene, citric acid, conductive carbon black, a carbon nanotube, and graphene.

18. A secondary battery, comprising a positive electrode plate, wherein the positive electrode plate comprises the positive electrode active material according to any one of claims 1 to 10 or the positive electrode active material prepared by the preparation method according to any one of claims 11 to 17.

19. The secondary battery according to claim 18, wherein the secondary battery comprises a sodium battery.

20. The secondary battery according to claim 18 or 19, wherein the secondary battery is a negative electrode-free sodium battery.

21. The secondary battery according to any one of claims 18 to 20, wherein the secondary battery further comprises a negative electrode plate, the negative electrode plate comprises a negative electrode current collector and a bottom coating arranged on at least one surface of the negative electrode current collector, and the bottom coating comprises one or more of a carbon nanotube, graphite, graphene, a silver-carbon composite nanoparticle, and a tin-carbon composite nanoparticle.

22. The secondary battery according to claim 21, wherein a surface density of the bottom coating is 5 g/m² to 50 g/m².

23. The secondary battery according to claim 21 or 22, wherein a thickness of the bottom coating is 2 µm to 100 µm.

24. A battery module, comprising the secondary battery according to any one of claims 18 to 23.

25. A battery pack, comprising the secondary battery according to any one of claims 18 to 23 or the battery module according to claim 24.

26. An electric device, comprising at least one of the secondary battery according to any one of claims 18 to 23, the battery module according to claim 24, or the battery pack according to claim 25.
